# EUROPEAN PATENT APPLICATION

(11) **EP 4 819 480 A1**
(43) Date of publication of application: **07.10.2026**
(21) Application number: 24918000.1
(22) Date of filing: 29.07.2024
(51) Int. Cl.: H02P 9/14, H02P 101/30

(54) **FEEDFORWARD EXCITATION CURRENT DETERMINING METHOD, AND AIRCRAFT THREE-STAGE ELECTRIC EXCITATION POWER GENERATION SYSTEM**

(30) Priority: 16.01.2024 CN 202410065424
(71) Applicant: Comac Beijing Aircraft Technology Research Institute, Beijing 102200 (CN); Commercial Aircraft Corporation Of China Ltd, Shanghai 200131 (CN)
(72) Inventor: WEI, Zeping, Beijing 102200 (CN); WU, Lin, Beijing 102200 (CN)
(74) Representative: Gille Hrabal Partnerschaftsgesellschaft mbB Patentanwälte
(86) International application number: PCT/CN2024/108107
(87) International publication number: WO 2025/152387

(57) **Abstract**

A method and an apparatus for determining a feedforward excitation current, and a storage medium, which relates to the technical field of aviation electrics. An inner current loop is configured to respond to a load change directly and quickly, instead of relying solely on an outer voltage loop. Dynamic performance of an aircraft variable frequency AC power generation system is thus improved. The method is applicable to a three-stage excitation generation system for aircraft. The system comprises a main generator, a main exciter, a permanent magnet exciter, a rotary rectifier, a generator controller, and an apparatus for determining the feedforward excitation current. The apparatus is configured for: obtaining a load power of the main generator, an engine speed of the main generator, and a preset reference voltage; calculating an excitation current required by a current load and a no-load excitation current according to the load power, the engine speed, the preset reference voltage, a parameter of the main generator, and a parameter of the main exciter; and determining the feedforward excitation current according to the excitation current required by the current load and the no-load excitation current.

## Description

### TECHNICAL FIELD

This application relates to the technical field of aviation electrics, and particularly to a method for determining a feedforward excitation current and a three-stage excitation generation system for aircraft.

### BACKGROUND

Three-stage excitation generators are widely applied to high-power AC systems in aviation. A three-stage excitation generation system for aircraft comprises a main generator, a main exciter, a permanent magnet exciter, a rotary rectifier, and a generator controller.

In related art, when regulating a voltage output by the three-stage excitation generator, the generator controller needs to detect signals reflecting, for example, an output voltage of the main generator and an excitation current of the main exciter. Then, the generator controller changes the excitation current using a voltage regulating program. Hence, the excitation current is controlled, and thereby the output voltage of the main generator is regulated.

At present, different typical operating points of the three-stage excitation generation system may be selected on a basis of tests, and data of the excitation current and data of a load power of the three-stage excitation generator at a certain engine speed may be fitted into a function according to test data. A current-feedforward method has been proposed accordingly for improving dynamic characteristics of the generator when it is switched under high load power. Nevertheless, this method suffers from a large workload, and the obtained function is not applicable under different engine speeds. Additionally, the test data is not stable throughout various test conditions, and hence the method may also suffer from large errors.

### SUMMARY

A method for determining a feedforward excitation current is provided according to embodiments of the present disclosure. An inner current loop is configured to respond to a load change directly and quickly, instead of relying solely on an outer voltage loop. Dynamic performance of an aircraft variable frequency AC power generation system is thus improved.

A method for determining a feedforward excitation current is provided according to embodiments of the present disclosure. The method is applicable to a three-stage excitation generation system for aircraft. The three-stage excitation generation system comprises a main generator, a main exciter, a permanent magnet exciter, a rotary rectifier, a generator controller, and an apparatus for determining the feedforward excitation current. The apparatus is configured for implementing the method. The method comprises: obtaining a load power of the main generator, an engine speed of the main generator, and a preset reference voltage; calculating an excitation current required by a current load and a no-load excitation current according to the load power, the engine speed, the preset reference voltage, a parameter of the main generator, and a parameter of the main exciter; and determining the feedforward excitation current according to the excitation current required by the current load and the no-load excitation current.

A three-stage excitation generation system for aircraft is further provided according to embodiments of the present disclosure. The system comprises a main generator, a main exciter, a permanent magnet exciter, a rotary rectifier, a generator controller, and an apparatus for determining the feedforward excitation current. The apparatus comprises: a sampling module, configured for obtaining a load power of the main generator, an engine speed of the main generator, and a preset reference voltage; a calculating module, configured for calculating an excitation current required by a current load and a no-load excitation current according to the load power, the engine speed, the preset reference voltage, a parameter of the main generator, and a parameter of the main exciter; and a determining module, configured for determining the feedforward excitation current according to the excitation current required by the current load and the no-load excitation current.

A computer program product is further provided according to embodiments of the present disclosure. The computer program product comprises a computer program. The computer program when executed by a processor implements the above method.

Herein the method for determining the feedforward excitation current is provided. First, the load power of the main generator, the engine speed of the main generator, and the preset reference voltage are obtained. Then, the excitation current required by the current load and the no-load excitation current are calculated according to the load power, the engine speed, the preset reference voltage, the parameter of the main generator, and the parameter of the main exciter. Afterwards, the feedforward excitation current is determined according to the excitation current required by the current load and the no-load excitation current. Hence, the feedforward excitation current is calculated with consideration of the influences of the load power of the main generator, the engine speed of the main generator, as well as the reference voltage, on the excitation current. The feedforward excitation current is utilized besides the traditional dual-closed-loop control that is based on the voltage and the excitation current. In comparison with sole dependency on the external voltage loop, the feedforward excitation current compensation enables a fast response of the inner current loop to load changes. The dynamic performance of the aircraft variable frequency AC power generation system can thus be improved.

### BRIEF DESCRIPTION OF THE DRAWINGS

FIG. 1 is a block diagram of control on a three-stage excitation generation system for aircraft according to an embodiment of the present disclosure.
FIG. 2 is a flowchart of a method for determining a feedforward excitation current according to an embodiment of the present disclosure.
FIG. 3 is a graph of a simulation curve of an excitation current according to an embodiment of the present disclosure.
FIG. 4 is a graph of a simulation curve of an output voltage according to an embodiment of the present disclosure.
FIG. 5 is a schematic structural diagram of an apparatus for determining a feedforward excitation current according to an embodiment of the present disclosure.

### DETAILED DESCRIPTION OF THE EMBODIMENTS

Hereinafter technical solutions of the present disclosure are illustrated in detail using the drawings and specific embodiments for better understanding of the technical solutions. Embodiments of the present disclosure and specific features in the embodiments are intended for describing details of the technical solutions, rather than limiting the technical solutions. Embodiments of the present disclosure and specific features in the embodiments can be combined with each other unless there is a conflict.

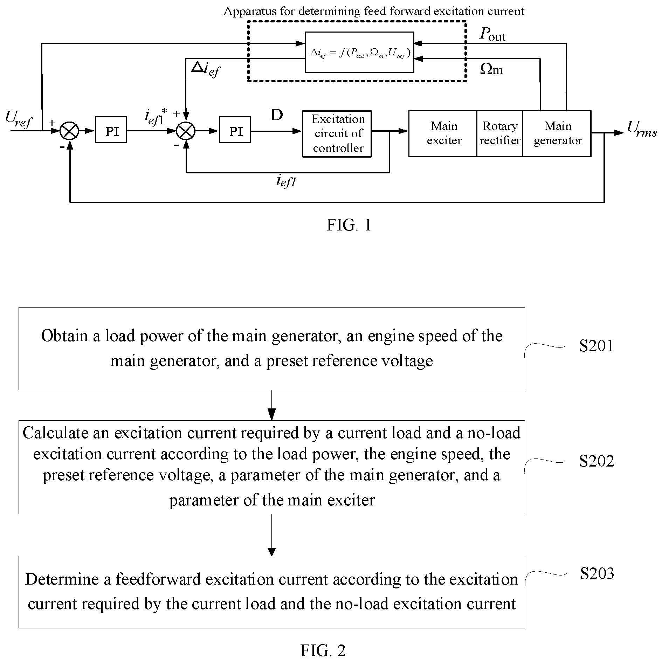

Reference is made to FIG. 1, which shows a block diagram of control on a three-stage excitation generation system for aircraft according to an embodiment of the present disclosure. The block diagram shows a main generator, a main exciter, a rotary rectifier, a generator controller, and an apparatus for determining a feedforward excitation current. The generator controller comprises a voltage-loop proportion-integration (PI) controller, a current-loop PI controller, and an excitation circuit of the controller.

As shown in FIG. 1, the apparatus for determining the feedforward excitation current has three inputs and one output. The three inputs are a load power *Pₒᵤₜ* of the generation system, an engine speed Ω*ₘ* of (i.e., driving) the main generator, and a preset reference voltage *U_{ref}.* The output is the feedforward excitation current Δ*i_{ef}*. As shown in FIG. 1, an input of the outer voltage loop is the preset reference voltage *U_{ref}* for the output of the main generator. A difference between the preset reference voltage *U_{ref}* and a root-mean-square (RMS) output voltage *Uᵣₘₛ* of the main generator is fed into the voltage-loop PI controller to obtain a setpoint excitation current ${i}_{ef 1}^{∗}$. A difference between the setpoint excitation current ${i}_{ef 1}^{∗}$ and the excitation current *i*_{*ef* 1} of the controller is added to the feedforward excitation current Δ*i_{ef}*, and the result is fed into the current-loop PI controller to obtain a duty cycle D for modulating the excitation circuit. The duty cycle D is input into a field programmable gate array (FPGA) processor. The FPGA compares the duty cycle D and a carrier signal to generate a pulse width modulation (PWM) wave. The PWM wave enables the control on the excitation circuit of the controller.

In an embodiment, the RMS output voltage *Uᵣₘₛ* is obtained through following operations. An alternating current (AC) voltage is acquired at a voltage regulation point of the generation system. The AC voltage is subject to voltage division using resistors and then is fed into an analog-to-digital (A/D) conversion chip to obtain a digital signal. The digital signal obtained after the conversion is sent to a microprocessor in the controller. The microprocessor calculates a transient value of the RMS output voltage *Uᵣₘₛ* according to an electrical angle of the main generator using the Clark transformation and the Parker transformation.

The excitation current *i_{ef}* of the main exciter is converted into a voltage signal through a sampling resistor. The voltage signal is filtered by a second-order low-pass filter and then sent to an A/D converter chip to obtain a digital signal. The digital signal is also sent to the microprocessor.

On the basis of FIG. 1, a method for determining a feedforward excitation current is provided according to an embodiment of the present disclosure. The method is applicable to the apparatus for determining the feedforward excitation current. FIG. 2 shows a flowchart of a method for determining a feedforward excitation current according to an embodiment of the present disclosure. The method comprises the following steps S201 to S203.

In step S201, a load power of the main generator, an engine speed of the main generator, and a preset reference voltage are obtained.

In an embodiment, an RMS current and an RMS voltage, which are output by the main generator to its load, are multiplied to obtain the load power *Pₒᵤₜ*. For example, current output by the main generator is converted into a voltage signal through a sampling resistor, and the voltage signal is filtered by a second-order low-pass filter and sent to an A/D converter chip to obtain into a digital signal. The digital signal output from the A/D converter chip is then sent to a microprocessor, and the microprocessor calculates the RMS current using the Clark transformation and the Parker transformation. The RMS current is multiplied by the RMS output voltage *Uᵣₘₛ* to obtain the output of the generation system power, i.e., the load power *Pₒᵤₜ.*

The main generator and its engine are coaxial. Hence, in an embodiment, a position signal feedback by a sensor located on a bearing of the engine is differentiated to obtain the engine speed Ω*ₘ*, which serves a rotation speed of the main generator.

In step S202, an excitation current required by a current load and a no-load excitation current are calculated according to the load power, the engine speed, the preset reference voltage, a parameter of the main generator, and a parameter of the main exciter.

In the three-stage excitation generation systems, the load power *Pₒᵤₜ* may be calculated by multiplying the RMS output voltage *Uᵣₘₛ* with the RMS current *Iᵣₘₛ.* The reference voltage *U_{ref}* preset in the controller may be a target RMS phase voltage at the output of the generation system. The reference voltage *U_{ref}* is thus regarded as a known quantity.

The parameter of the main generator may refer to at least one of: armature winding resistance *R*ₛ, direct axis inductance *L*_{d}, armature-field mutual inductance *L*_{md}, field winding resistance *R_{f}*, and a quantity *p*_{g} of pole pairs. They are known quantities and are determined according to design of the main generator.

The parameter of the main exciter may refer to at least one of: armature winding resistance *R*ₑₛ, direct-axis inductance *L*_{ed}, armature-field mutual inductance *L*_{emd}, field winding resistance *R*_{esf}, and a quantity *p_{eg}* of pole pairs. They are known quantities and are determined according to design of the main exciter.

The engine speed *Ω*ₘ may calculated through differentiating a sampling signal output by a position sensor. It may be treated as a known quantity.

In an embodiment, the excitation current required by the current load is calculated using the following equation. The equation indicates a relationship among the excitation current of the main exciter in the three-stage excitation generation system, the load power, the engine speed, and the reference voltage.${i}_{ef} = \frac{1}{{L}_{emd} {L}_{md}} \sqrt{\frac{2 {U}_{ref}^{2}}{{p}_{g}^{2} {Ω}_{m}^{2}} + \frac{2 {P}_{out}^{2} {L}_{d}^{2}}{9 {U}_{ref}^{2}}} \sqrt{\frac{0.36 {R}_{f}^{2}}{{p}_{eg}^{2} {Ω}_{m}^{2}} + \frac{4 {L}_{ed}^{2}}{3.24}}$

*i_{ef}* represents the excitation current required for the current load, *L*_{emd} represents the armature-field mutual inductance of the main exciter, *L*_{md} represents the armature-field mutual inductance of the main generator, *U_{ref}* represents the preset reference voltage, *p*_{g} represents the quantity of pole pairs of the main generator, Ω*ₘ* represents the engine speed, *Pₒᵤₜ* represents the load power, *L_{d}* represents the direct-axis inductance of the main generator, *R_{f}* represents the field winding resistance, *p_{eg}* represents the quantity of pole pairs of the main exciter, and *L_{ed}* represents the direct-axis inductance of the main exciter.

The generation system does not output power under zero load, that is, the load power *Pₒᵤₜ* is zero in the no-loads case. Using the above equation, the no-load excitation current may be calculated as follows. ${i}_{ef 0} = \frac{1}{{L}_{emd} {L}_{md}} \sqrt{\frac{2 {U}_{ref}^{2}}{{p}_{g}^{2} {Ω}_{m}^{2}}} \sqrt{\frac{0.36 {R}_{f}^{2}}{{p}_{eg}^{2} {Ω}_{m}^{2}} + \frac{4 {L}_{ed}^{2}}{3.24}}$

*i*_{*ef* 0} represents the no-load excitation current.

In step S203, the feedforward excitation current is determined according to the excitation current required by the current load and the no-load excitation current.

Herein the change in excitation current, i.e., the difference between the excitation current required by the current load power and the no-load excitation current is fed forward for improving the response capability of the entire system with respect to a change in the load. The difference between excitation current required for the current load and the no-load excitation current may be calculated as follows to obtain the feedforward excitation current.$Δ {i}_{ef} = k ⋅ \frac{1}{{L}_{emd} {L}_{md}} \left(\sqrt{\frac{2 {U}_{ref}^{2}}{{p}_{g}^{2} {Ω}_{m}^{2}} + \frac{2 {P}_{out}^{2} {L}_{d}^{2}}{9 {U}_{ref}^{2}}}-\sqrt{\frac{2 {U}_{ref}^{2}}{{p}_{g}^{2} {Ω}_{m}^{2}}}\right) \sqrt{\frac{0.36 {R}_{f}^{2}}{{p}_{eg}^{2} {Ω}_{m}^{2}} + \frac{4 {L}_{ed}^{2}}{3.24}}$

The result of simplified derivation of the excitation current may deviate from the actual excitation current, and thus an error compensation factor k is introduced into the above equation. The relationship may be written as follows for simplicity.$Δ {i}_{ef} = f \left({P}_{out}, {Ω}_{m}, {U}_{ref}\right)$

The relationship can also be written as follows.$f \left({P}_{out}, {Ω}_{m}, {U}_{ref}\right) = k ⋅ \frac{1}{{L}_{emd} {L}_{md}} \left(\sqrt{\frac{2 {U}_{ref}^{2}}{{p}_{g}^{2} {Ω}_{m}^{2}} + \frac{2 {P}_{out}^{2} {L}_{d}^{2}}{9 {U}_{ref}^{2}}}-\sqrt{\frac{2 {U}_{ref}^{2}}{{p}_{g}^{2} {Ω}_{m}^{2}}}\right) \sqrt{\frac{0.36 {R}_{f}^{2}}{{p}_{eg}^{2} {Ω}_{m}^{2}} + \frac{4 {L}_{ed}^{2}}{3.24}}$

The excitation current of the main exciter in the three-stage excitation generation system is related to the load power, the engine speed, and the reference voltage using the above relationship.

Hence, the functional relationship among the load power, the engine speed, the preset reference voltage, and the excitation current is established on a basis of selected parameters and theoretical derivation. It is not necessary to establish a real environment for physical tests and derive an approximate curve of the relationship among the load power, the engine speed, the preset reference voltage, and the excitation current through fitting the test data. Here the influences of the load power, the engine speed, the preset reference voltage on the excitation current are considered. The feedforward excitation current is introduced into the traditional dual-closed-loop control which is based on the voltage and the excitation current. Compensation of the feedforward excitation current ensures a fast and direct response of the inner current loop to a change in the load. The control is not solely based on the external voltage loop, thereby improving the dynamic performance of the aircraft variable frequency AC power generation system.

Herein the method for determining the feedforward excitation current is provided. First, the load power of the main generator, the engine speed of the main generator, and the preset reference voltage are obtained. Then, the excitation current required by the current load and the no-load excitation current are calculated according to the load power, the engine speed, the preset reference voltage, the parameter of the main generator, and the parameter of the main exciter. Afterwards, the feedforward excitation current is determined according to the excitation current required by the current load and the no-load excitation current. Hence, the feedforward excitation current is calculated with consideration of the influences of the load power of the main generator, the engine speed of the main generator, as well as the reference voltage, on the excitation current. The feedforward excitation current is utilized besides the traditional dual-closed-loop control that is based on the voltage and the excitation current. In comparison with sole dependency on the external voltage loop, the feedforward excitation current compensation enables a fast response of the inner current loop to load changes. The dynamic performance of the aircraft variable frequency AC power generation system can thus be improved.

Hereinafter illustrated is a process of deriving the equation for calculating the feedforward excitation current Δ*i_{ef}.*

The output voltage of the three-stage excitation generator is controlled by the excitation current of the main exciter. The permanent magnet exciter in the generator is regarded as an uncontrollable power supply of the generator controller. A mathematical model of the three-stage excitation generator is subject to the Clark transformation and the Parker transformation. The flux linkage equation and the voltage equation of the generator may be written as following equations (1) and (2). $\left[\begin{matrix}{ψ}_{d} \\ {ψ}_{q} \\ {ψ}_{0} \\ {ψ}_{f} \\ {ψ}_{D} \\ {ψ}_{Q}\end{matrix}\right] = \left[\begin{matrix}{L}_{d} & 0 & 0 & {L}_{df} & {L}_{dD} & 0 \\ 0 & {L}_{q} & 0 & 0 & 0 & {L}_{qQ} \\ 0 & 0 & {L}_{0} & 0 & 0 & 0 \\ {L}_{df} & 0 & 0 & {L}_{f} & {L}_{fD} & 0 \\ {L}_{dD} & 0 & 0 & {L}_{fD} & {L}_{D} & 0 \\ 0 & {L}_{qQ} & 0 & 0 & 0 & {L}_{Q}\end{matrix}\right] \left[\begin{matrix}- {i}_{d} \\ - {i}_{q} \\ - {i}_{0} \\ {i}_{f} \\ {i}_{D} \\ {i}_{Q}\end{matrix}\right]$ (1) $\left[\begin{matrix}{u}_{d} \\ {u}_{q} \\ {u}_{o} \\ {u}_{f} \\ 0 \\ 0\end{matrix}\right] = \left[\begin{matrix}r & 0 & 0 & 0 & 0 & 0 \\ 0 & r & 0 & 0 & 0 & 0 \\ 0 & 0 & r & 0 & 0 & 0 \\ 0 & 0 & 0 & {r}_{f} & 0 & 0 \\ 0 & 0 & 0 & 0 & {r}_{D} & 0 \\ 0 & 0 & 0 & 0 & 0 & {r}_{Q}\end{matrix}\right] \left[\begin{matrix}- {i}_{d} \\ - {i}_{q} \\ - {i}_{o} \\ {i}_{f} \\ {i}_{D} \\ {i}_{Q}\end{matrix}\right] + p \left[\begin{matrix}{ψ}_{d} \\ {ψ}_{q} \\ {ψ}_{o} \\ {ψ}_{f} \\ {ψ}_{D} \\ {ψ}_{Q}\end{matrix}\right] - ω \left[\begin{matrix}{ψ}_{q} \\ - {ψ}_{d} \\ 0 \\ 0 \\ 0 \\ 0\end{matrix}\right]$ (2)

In the flux linkage equation (1), *i_{d}, i_{q}, i₀, i_{f}, i_{D}* and *i_{Q}* represent a direct-axis current, a quadrature-axis current, a zero-axis current, an excitation current, a direct-axis damper winding current, and a quadrature-axis damper winding current, respectively. *ψ_{d}*, *ψ_{q}*, *ψ*₀, *ψ_{f}*, *ψ_{D}* and *ψ_{Q}* represent a direct-axis flux linkage, a quadrature-axis flux linkage, a zero-axis flux linkage, an excitation flux linkage, a direct-axis damper winding flux linkage, and a quadrature-axis damper winding flux linkage. *L_{d}, L_{q}, L*₀*, L_{f}, L_{D}, L_{Q}, L_{df}, L_{dD}, L_{fD}* and *L_{qQ}* represent direct-axis inductance, quadrature-axis inductance, zero-axis inductance, excitation inductance, inductance of direct-axis damper windings, inductance of quadrature-axis damper windings, mutual inductance between direct-axis windings and excitation windings, mutual inductance between direct-axis windings and the direct-axis damper windings, mutual inductance between excitation windings and the direct-axis damper windings, and mutual inductance between quadrature-axis windings and the quadrature-axis damper windings.

In the voltage equation (2), p represents a time differential factor, *ω* represents an angular velocity, *u_{d}* represents a direct-axis voltage, *u_{q}* represents a quadrature-axis voltage, *u*₀ represents a zero-axis voltage, and *u_{f}* represents an excitation winding voltage. *r*, *r_{f}*, *r_{D}*, *r_{Q}* represents resistance of armature windings, resistance of the excitation windings, resistance of the direct-axis damper windings, and resistance of the quadrature-axis damper windings, respectively.

In the direct-quadrature (dq) coordinate system, a zero-axis component is usually equal to zero. Moreover, the damper windings on the rotor generate an induced electromotive force only during the startup stage of the generator and do not cut the magnetic field during the synchronous-rotation stage of the generator. The damper winding can thus be ignored when only a system response during the synchronous-rotation stage is considered. Hence, the zero-axis components and the damper winding components in the flux equation (1) and the voltage equation (2) are ignored after the startup to obtain a simplified flux equation (3) and a simplified voltage equation (4) as follows.$\left[\begin{matrix}{ψ}_{d} \\ {ψ}_{q} \\ {ψ}_{f}\end{matrix}\right] = \left[\begin{matrix}{L}_{d} & 0 & {L}_{df} \\ 0 & {L}_{q} & 0 \\ {L}_{df} & 0 & {L}_{f}\end{matrix}\right] \left[\begin{matrix}- {i}_{d} \\ - {i}_{q} \\ {i}_{f}\end{matrix}\right]$ (3) $\left[\begin{matrix}{u}_{d} \\ {u}_{q} \\ {u}_{f}\end{matrix}\right] = \left[\begin{matrix}r & 0 & 0 \\ 0 & r & 0 \\ 0 & 0 & {r}_{f}\end{matrix}\right] \left[\begin{matrix}- {i}_{d} \\ - {i}_{q} \\ {i}_{f}\end{matrix}\right] + p \left[\begin{matrix}{ψ}_{d} \\ {ψ}_{q} \\ {ψ}_{f}\end{matrix}\right] - ω \left[\begin{matrix}{ψ}_{q} \\ - {ψ}_{d} \\ 0\end{matrix}\right]$ (4)

The load power *Pₒᵤₜ*, the engine speed Ω*ₘ*, and the preset reference voltage *U_{ref}* of the main generator are combined with equations (3) and (4) to derive the excitation current value required by a current operating condition under a steady state. The difference between the excitation current required by the current load and the excitation current under a zero-load condition serves as a feedforward term of the excitation current. The influences of the output power of the generator, the engine speed, and the preset reference voltage on excitation current are considered.

First, the voltage equation of the main generator can be derived from equations (3) and (4) as follows.$\begin{matrix}{u}_{d} = - {R}_{s} {i}_{d} - {L}_{d} \frac{{di}_{d}}{dt} + {L}_{md} \frac{{di}_{f}}{dt} + {ω}_{g} {L}_{q} {i}_{q} \\ {u}_{q} = - {R}_{s} {i}_{q} - {L}_{q} \frac{{di}_{q}}{dt} + {ω}_{g} \left(-{L}_{d}{i}_{d}+{L}_{md}{i}_{f}\right)\end{matrix}$ (5)

Equation (5) describes a transient voltage for the main generator. The three-stage excitation generation system only operates at a high rotation rate, and thus the inductive reactance of the armature windings is significantly greater than the resistive reactance of the armature windings, i.e., *ω_{g}L* > > *Rₛ*. Hence, the resistance of the armature winding can be ignored. When the generator is at a steady state, the voltage and current in the dq coordinate system are constant, and thus the transient part $\frac{d}{dt}$ in equation (5) can be regarded as zero. The engine speed Ωₘ and the quantity p_{g} of pole pairs of the main generator are known constants, and thus the electrical frequency *ω*_{g} in equation (5) can be replaced by *p_{g}* *Ωₘ.

The above simplification converts equation (1) into the following equation.$\begin{matrix}{u}_{d} = {p}_{g} {Ω}_{m} {L}_{q} {i}_{q} \\ {u}_{q} = {p}_{g} {Ω}_{m} \left(-{L}_{d}{i}_{d}+{L}_{md}{i}_{f}\right)\end{matrix}$ (6)

The output voltage of the generator is monitored and controlled by the generator controller. When the generator is in a steady state, the output voltage is stabilized as *U*_{ref}, i.e., the preset reference voltage. According to the amplitude-invariant Clark transformation, there is a following equation.$2 {U}_{ref}^{2} = {u}_{d}^{2} + {u}_{q}^{2}$ (7)

Substituting equation (6) into equation (7) yields the voltage equation as follows.$2 {U}_{ref}^{2} = {p}_{g}^{2} {Ω}_{m}^{2} \left({L}_{q}^{2}{i}_{q}^{2}+{L}_{d}^{2}{i}_{d}^{2}+{L}_{md}^{2}{i}_{f}^{2}-2{L}_{d}{L}_{md}{i}_{d}{i}_{f}\right)$ (8)

Then, an active power equation is established for the main generator.${P}_{el} = \frac{3}{2} Re \left\{{\vec{u}}_{s}∗{\vec{i}}_{s}\right\} = \frac{3}{2} \left({u}_{d}{i}_{d}+{u}_{q}{i}_{q}\right)$ (9)

Equation (9) describes an amplitude-invariant active power of a generator. Loads of the three phases of the main generator are regarded as resistive loads, and hence the active power is equal to a sum of the load power of the three phases. Substituting equation (6) into equation (9) yields the active power equation of the main generator.${P}_{out} = \frac{3}{2} {p}_{g} {Ω}_{m} {L}_{md} {i}_{f} {i}_{q}$ (10)

The reactive power of the main generator is described using the following equation.${Q}_{el} = \frac{3}{2} Im \left\{{\vec{u}}_{s}∗{\vec{i}}_{s}\right\} = \frac{3}{2} \left({u}_{q}{i}_{d}-{u}_{d}{i}_{q}\right)$ (11)

Since the active power is equal to the sum of the load power of the three phases, the reactive power of the main generator is zero. Substituting equation (6) into equation (11) yields the reactive power equation of the main generator. $0 = {L}_{d} {i}_{d}^{2} + {L}_{q} {i}_{q}^{2} - {L}_{md} {i}_{f} {i}_{d}$ (12)

Equations (8), (10), and (12) represent the voltage equation, the active power equation, and the reactive power equation, respectively, of the main generator. The three equations form a main-generator equation set. The direct-axis current *i_{d}*, the quadrature-axis current *i_{q}*, and the excitation current *i_{f}* are unknown values. The equation set is solved to obtain a relationship between the excitation current and the load power of the main generator as follows.${i}_{f} = \frac{1}{{L}_{md}} \sqrt{\frac{2 {U}_{ref}^{2}}{{p}_{g}^{2} {Ω}_{m}^{2}} + \frac{2 {P}_{out}^{2} {L}_{d}^{2}}{9 {U}_{ref}^{2}}}$ (13)

Since both the main generator and the main exciter are electrically excited AC synchronous generators, the voltage equation for the main exciter is constructed in a similar manner as follows.$\begin{matrix}{u}_{ed} = {p}_{eg} {Ω}_{m} {L}_{eq} {i}_{eq} \\ {u}_{eq} = {p}_{eg} {Ω}_{m} \left(-{L}_{ed}{i}_{ed}+{L}_{emd}{i}_{ef}\right)\end{matrix}$ (14)

When the power generation system is in a steady state, the current of the main generator is constant under ideal conditions. Therefore, the excitation voltage of the main generator is a product of internal resistance and the excitation current of an excitation inductor.${u}_{f} = {R}_{f} {i}_{f}$ (15)

In the three-stage excitation generation system, the excitation voltage of the main generator is obtained by rectifying the three-phase voltage of the main exciter through the rotary rectifier. Hence, the armature voltage of the main exciter satisfies the following equation.${u}_{ed}^{2} + {u}_{eq}^{2} = {\left(\frac{\sqrt{2}}{2.34}{u}_{f}\right)}^{2} \approx 0.36 {u}_{f}^{2}$ (16)

Substituting equations (14) and (15) into equation (16) yields the voltage equation of the main exciter as follows.$0.36 {R}_{f}^{2} {i}_{f}^{2} = {p}_{eg}^{2} {Ω}_{m}^{2} \left({L}_{eq}^{2}{i}_{eq}^{2}+{L}_{ed}^{2}{i}_{ed}^{2}+{L}_{emd}^{2}{i}_{f}^{2}-2{L}_{ed}{L}_{emd}{i}_{ed}{i}_{ef}\right)$ (17)

The active power equation for the output of the main exciter is similar to that of the main generator.${P}_{e , el} = \frac{3}{2} {p}_{eg} {Ω}_{em} {L}_{emd} {i}_{ef} {i}_{eq}$ (18)

The active power provided by the main exciter is the power dissipated by the resistive reactance of an excitation coil of the main generator and can be described by the following equation.${P}_{e , el} = {R}_{f} {i}_{f}^{2}$ (19)

Substituting equation (19) into equation (18) yields the active power equation of the main exciter as follows.${R}_{f} {i}_{f}^{2} = \frac{3}{2} {p}_{eg} {Ω}_{em} {L}_{emd} {i}_{ef} {i}_{eq}$ (20)

In the steady state, the excitation current of the main generator is constant under ideal conditions, and only the resistive reactance in the excitation coil consumes power. Hence, the reactive power of the main exciter is equal to zero, and the reactive power equation of the main exciter is as follows.$0 = {L}_{ed} {i}_{ed}^{2} + {L}_{eq} {i}_{eq}^{2} - {L}_{emd} {i}_{ef} {i}_{ed}$ (21)

Equations (17), (20), and (21) form the main-exciter equation set. The equation set is solved to obtain a relationship between the excitation current of the main exciter and the excitation current of the main generator as follows.${i}_{ef} = \frac{{i}_{f}}{{L}_{emd}} \sqrt{\frac{0.36 {R}_{f}^{2}}{{p}_{eg}^{2} {Ω}_{m}^{2}} + \frac{4 {L}_{ed}^{2}}{3.24}}$ (22)

Equation (22) describes relationship between the excitation current of the main exciter and the excitation current of the main generator. Substituting equation (13) into equation (22) yields the following equations.${i}_{ef} = f \left({P}_{out}, {Ω}_{m}, {U}_{ref}\right)$ (23) ${i}_{ef} = \frac{1}{{L}_{emd} {L}_{md}} \sqrt{\frac{2 {U}_{ref}^{2}}{{p}_{g}^{2} {Ω}_{m}^{2}} + \frac{2 {P}_{out}^{2} {L}_{d}^{2}}{9 {U}_{ref}^{2}}} \sqrt{\frac{0.36 {R}_{f}^{2}}{{p}_{eg}^{2} {Ω}_{m}^{2}} + \frac{4 {L}_{ed}^{2}}{3.24}}$ (24)

Equations (23) and (24) describe the relationship between the excitation current of the main exciter, the load power of the generation system, the engine speed, and the target phase voltage of the main generator. Equation (24) is a full expression of equation (23). Equation (24) enables calculating the excitation current of the main exciter under the current operating condition according to the load power *P*ₒᵤₜ and the engine speed Ωₘ that are fed by sensors as well as and the reference voltage *U_{ref}* preset by the controller.

Since simplifications are made in a process of deriving equation (24), the result of equation (24) may deviate from the actual excitation current. In order to compensate for this deviation, the compensation factor k is introduced as follows.${i}_{ef} = \frac{k}{{L}_{emd} {L}_{md}} \sqrt{\frac{2 {U}_{ref}^{2}}{{p}_{g}^{2} {Ω}_{m}^{2}} + \frac{2 {P}_{out}^{2} {L}_{d}^{2}}{9 {U}_{ref}^{2}}} \sqrt{\frac{0.36 {R}_{f}^{2}}{{p}_{eg}^{2} {Ω}_{m}^{2}} + \frac{4 {L}_{ed}^{2}}{3.24}}$ (25)

A case of zero load means that *Pₒᵤₜ* is equal to zero, and the no-load excitation current is calculated using a follow equation.${i}_{ef 0} = \frac{1}{{L}_{emd} {L}_{md}} \sqrt{\frac{2 {U}_{ref}^{2}}{{p}_{g}^{2} {Ω}_{m}^{2}}} \sqrt{\frac{0.36 {R}_{f}^{2}}{{p}_{eg}^{2} {Ω}_{m}^{2}} + \frac{4 {L}_{ed}^{2}}{3.24}}$ (26)

Herein the feedforward term is set as the change in the excitation current, i.e., the difference between the excitation current required by the current load and the no-load excitation current, in order to improve the response capability of the generation system to a h change in the load. The feedforward excitation current can be obtained as a difference between equations (25) and (26) as follows.$Δ {i}_{ef} = k ⋅ \frac{1}{{L}_{emd} {L}_{md}} \left(\sqrt{\frac{2 {U}_{ref}^{2}}{{p}_{g}^{2} {Ω}_{m}^{2}} + \frac{2 {P}_{out}^{2} {L}_{d}^{2}}{9 {U}_{ref}^{2}}}-\sqrt{\frac{2 {U}_{ref}^{2}}{{p}_{g}^{2} {Ω}_{m}^{2}}}\right) \sqrt{\frac{0.36 {R}_{f}^{2}}{{p}_{eg}^{2} {Ω}_{m}^{2}} + \frac{4 {L}_{ed}^{2}}{3.24}}$ (27)

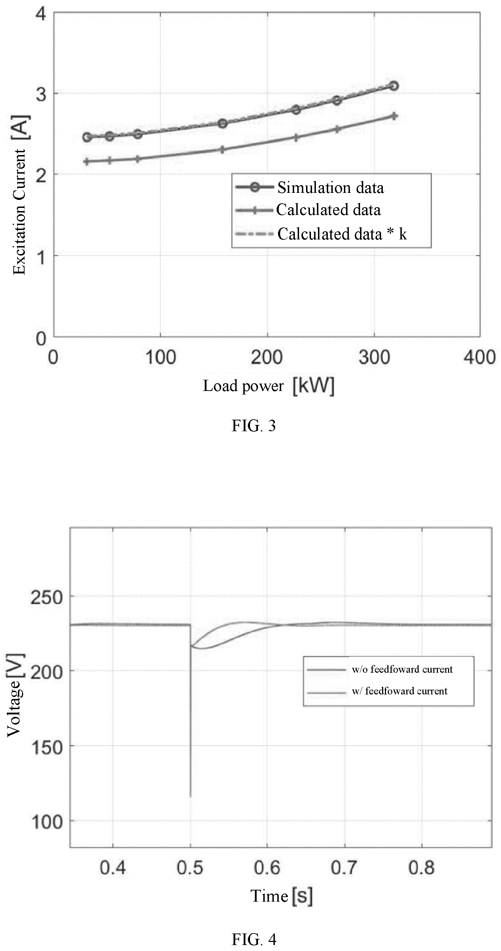

FIG. 3 shows a comparison result between the excitation current calculated from equation (27) and the simulation data at 18,000 rpm. The "calculated data" in FIG. 3 refers to the excitation current calculated according to equation (27). Since the winding resistance is ignored in the process of deriving equation (27), the calculated excitation current is lower than the simulation data. Once the compensation factor is introduced to correct the excitation current calculated by equation (27), the calculated data are almost identical to the simulation data, indicating high accuracy.

FIG. 4 shows a simulation curve of an output voltage of a system having the feedforward excitation current and a curve of an output voltage of a system without the feedforward excitation current, where there is a change from half load to full load at 0.5s. It is obvious that the feedforward excitation current can help increase response speed of system significantly, shorten undervoltage duration during loading, and improve system performance.

The serial numbers of the steps in the foregoing embodiments do not indicate an order of executing these step. The order of execution of the processes shall depend on their functions and internal logic, and the serial numbers shall not be construed as any limitation on the implementations of the present disclosure.

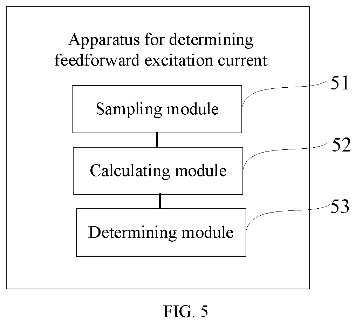

An apparatus for determining a feedforward excitation current is provided according to embodiments of the present disclosure. The apparatus corresponds to the method for determining the feedforward excitation current in the foregoing embodiments. Reference is made to FIG. 5. Hereinafter the functional modules of the apparatus are described in detail as follows.

The sampling module 51 is configured for obtaining a load power of the main generator, an engine speed of the main generator, and a preset reference voltage.

The calculating module 52 is configured for calculating an excitation current required by a current load and a no-load excitation current according to the load power, the engine speed, the preset reference voltage, a parameter of the main generator, and a parameter of the main exciter.

The determining module 53 is configured for determining the feedforward excitation current according to the excitation current required by the current load and the no-load excitation current.

In an embodiment, calculating the excitation current required by the current load according to the load power, the engine speed, the preset reference voltage, the parameter of the main generator, and the parameter of the main exciter comprises following operations.

The excitation current required for the current load is calculated through a following equation.${i}_{ef} = \frac{1}{{L}_{emd} {L}_{md}} \sqrt{\frac{2 {U}_{ref}^{2}}{{p}_{g}^{2} {Ω}_{m}^{2}} + \frac{2 {P}_{out}^{2} {L}_{d}^{2}}{9 {U}_{ref}^{2}}} \sqrt{\frac{0.36 {R}_{f}^{2}}{{p}_{eg}^{2} {Ω}_{m}^{2}} + \frac{4 {L}_{ed}^{2}}{3.24}}$

*i_{ef}* represents the excitation current required for the current load, *L*_{emd} represents armature-field mutual inductance of the main exciter, *L*_{md} represents armature-field mutual inductance of the main generator, *U_{ref}* represents the preset reference voltage, *p*_{g} represents a quantity of pole pairs of the main generator, Ω*ₘ* represents the engine speed, *Pₒᵤₜ* represents the load power, *L_{d}* represents direct-axis inductance of the main generator, *R_{f}* represents field winding resistance, *p_{eg}* represents a quantity of pole pairs of the main exciter, and *L_{ed}* represents direct-axis inductance of the main exciter.

In an embodiment, the no-load excitation current is calculated through a following equation.${i}_{ef 0} = \frac{1}{{L}_{emd} {L}_{md}} \sqrt{\frac{2 {U}_{ref}^{2}}{{p}_{g}^{2} {Ω}_{m}^{2}}} \sqrt{\frac{0.36 {R}_{f}^{2}}{{p}_{eg}^{2} {Ω}_{m}^{2}} + \frac{4 {L}_{ed}^{2}}{3.24}}$

*i*_{*ef* 0} represents the no-load excitation current.

In an embodiment, the feedforward excitation current is calculated through a following equation.$f \left({P}_{out}, {Ω}_{m}, {U}_{ref}\right) = k ⋅ \frac{1}{{L}_{emd} {L}_{md}} \left(\sqrt{\frac{2 {U}_{ref}^{2}}{{p}_{g}^{2} {Ω}_{m}^{2}} + \frac{2 {P}_{out}^{2} {L}_{d}^{2}}{9 {U}_{ref}^{2}}}-\sqrt{\frac{2 {U}_{ref}^{2}}{{p}_{g}^{2} {Ω}_{m}^{2}}}\right) \sqrt{\frac{0.36 {R}_{f}^{2}}{{p}_{eg}^{2} {Ω}_{m}^{2}} + \frac{4 {L}_{ed}^{2}}{3.24}}$

k represents an error compensation factor.

In an embodiment, a position signal fed back by a sensor arranged on a bearing of an engine is differentiated to obtain the engine speed.

In an embodiment, a root-mean-square current of the current load and a root-mean-square voltage of the current load are multiplied to obtain the load power.

Details of the apparatus for determining the feedforward excitation current may refer to those in the foregoing embodiments of the method for calculating position information of the aircraft and are not repeated herein. The modules in the apparatus may be implemented in whole or in part through software, hardware, or a combination of the two. The modules may be embedded in or independent of a processor in a computer device as hardware, or they may be stored in a memory of a computer device as software, so that the processor can invoke the modules to perform their corresponding operations.

Those skilled in the art may understand that all or a part of a process in the method(s) illustrated in the foregoing embodiments may be implemented through instructing relevant hardware through a computer program, and the computer program may be stored in a non-volatile computer-readable storage medium. The computer program when executed may implement a flow as illustrated in each method embodiment. Herein any reference to a memory, a storage, a database, or another medium used in any embodiment of the present disclosure may include a non-volatile memory and/or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random-access memory (RAM) or an external cache memory. Illustratively rather than restrictively, the RAM may be in a variety of forms, such as a static RAM (SRAM), a dynamic RAM (DRAM), a synchronous DRAM (SDRAM), a dual data rate SDRAM (DDRSDRAM), an enhanced SDRAM (ESDRAM), a synch link DRAM (SLDRAM), a memory bus (Rambus) direct RAM (RDRAM), a direct memory bus dynamic RAM (DRDRAM), and a memory bus dynamic RAM (RDRAM), or the like.

Those skilled in the art may clearly appreciate that for the sake of conciseness and brevity of description, the division of the aforementioned functional units and/or modules is merely exemplary. In practice, the aforementioned functional units and/or modules may be assigned to different functional units or different modules on requirement. That is, an internal structure of the apparatus may be divided into different functional units or modules to complete all or a part of the aforementioned functions.

The above embodiments are only intended for illustrating rather than limiting technical solutions of the present disclosure. Although the present disclosure has been described in detail with reference to the foregoing embodiments, those skilled in the art may appreciate that the technical solutions recorded in the foregoing embodiments may be modified or some of the technical features in the solutions may be replaced, and these modifications or replacements shall fall within the scope of protection of the present disclosure as long as they do not make an essence of the corresponding technical solutions depart from a spirit and a scope of the original technical solutions in the embodiments of the present disclosure.

## Claims

1. A method for determining a feedforward excitation current, applicable to a three-stage excitation generation system for aircraft, wherein the three-stage excitation generation system comprises a main generator, a main exciter, a permanent magnet exciter, a rotary rectifier, a generator controller, and an apparatus for determining the feedforward excitation current, the apparatus is configured for implementing the method, and the method comprises:
obtaining a load power of the main generator, an engine speed of the main generator, and a preset reference voltage;
calculating an excitation current required by a current load and a no-load excitation current according to the load power, the engine speed, the preset reference voltage, a parameter of the main generator, and a parameter of the main exciter; and
determining the feedforward excitation current according to the excitation current required by the current load and the no-load excitation current.

2. The method according to claim 1, wherein calculating the excitation current required by the current load according to the load power, the engine speed, the preset reference voltage, the parameter of the main generator, and the parameter of the main exciter comprises:
calculating the excitation current required for the current load through ${i}_{ef} = \frac{1}{{L}_{emd} {L}_{md}} \sqrt{\frac{2 {U}_{ref}^{2}}{{p}_{g}^{2} {Ω}_{m}^{2}} + \frac{2 {P}_{out}^{2} {L}_{d}^{2}}{9 {U}_{ref}^{2}}} \sqrt{\frac{0.36 {R}_{f}^{2}}{{p}_{eg}^{2} {Ω}_{m}^{2}} + \frac{4 {L}_{ed}^{2}}{3.24}}$
wherein *i_{ef}* represents the excitation current required for the current load, *L*_{emd} represents armature-field mutual inductance of the main exciter, *L*_{md} represents armature-field mutual inductance of the main generator, *U_{ref}* represents the preset reference voltage, *p*_{g} represents a quantity of pole pairs of the main generator, Ω*ₘ* represents the engine speed, *Pₒᵤₜ* represents the load power, *L_{d}* represents direct-axis inductance of the main generator, *R_{f}* represents field winding resistance, *p_{eg}* represents a quantity of pole pairs of the main exciter, and *L_{ed}* represents direct-axis inductance of the main exciter.

3. The method according to claim 2, wherein calculating the no-load excitation current according to the load power, the engine speed, the preset reference voltage, the parameter of the main generator, and the parameter of the main exciter comprises:
calculating the no-load excitation current through ${i}_{ef 0} = \frac{1}{{L}_{emd} {L}_{md}} \sqrt{\frac{2 {U}_{ref}^{2}}{{p}_{g}^{2} {Ω}_{m}^{2}}} \sqrt{\frac{0.36 {R}_{f}^{2}}{{p}_{eg}^{2} {Ω}_{m}^{2}} + \frac{4 {L}_{ed}^{2}}{3.24}}$
wherein *i*_{*ef* 0} represents the no-load excitation current.

4. The method according to claim 3, wherein determining the feedforward excitation current according to the excitation current required by the current load and the no-load excitation current comprises:
calculating the feedforward excitation current through $f \left({P}_{out}, {Ω}_{m}, {U}_{ref}\right) = k ⋅ \frac{1}{{L}_{emd} {L}_{md}} \left(\sqrt{\frac{2 {U}_{ref}^{2}}{{p}_{g}^{2} {Ω}_{m}^{2}} + \frac{2 {P}_{out}^{2} {L}_{d}^{2}}{9 {U}_{ref}^{2}}}-\sqrt{\frac{2 {U}_{ref}^{2}}{{p}_{g}^{2} {Ω}_{m}^{2}}}\right) \sqrt{\frac{0.36 {R}_{f}^{2}}{{p}_{eg}^{2} {Ω}_{m}^{2}} + \frac{4 {L}_{ed}^{2}}{3.24}}$
wherein k represents an error compensation factor.

5. The method according to claim 2, further comprising:
differentiating a position signal fed back by a sensor arranged on a bearing of an engine to obtain the engine speed.

6. The method according to claim 2, further comprising:
multiplying a root-mean-square current of the current load and a root-mean-square voltage of the current load to obtain the load power.

7. A three-stage excitation generation system for aircraft, comprising:
a main generator, a main exciter, a permanent magnet exciter, a rotary rectifier, a generator controller, and an apparatus for determining the feedforward excitation current;
wherein the apparatus comprises:
a sampling module, configured for obtaining a load power of the main generator, an engine speed of the main generator, and a preset reference voltage;
a calculating module, configured for calculating an excitation current required by a current load and a no-load excitation current according to the load power, the engine speed, the preset reference voltage, a parameter of the main generator, and a parameter of the main exciter; and
a determining module, configured for determining the feedforward excitation current according to the excitation current required by the current load and the no-load excitation current.

8. A computer device, comprising:
a memory, a processor, and a computer program;
wherein the computer program is stored in the memory and is executable by the processor, and the processor when executing the computer program implements the method according to any one of claims 1 to 6.

9. A computer-readable storage medium, storing a computer program, wherein the computer program when executed by a processor implements the method according to any one of claims 1 to 6.
